# EUROPEAN PATENT APPLICATION

(11) **EP 4 339 361 A1**
(43) Date of publication of application: **20.03.2024**
(21) Application number: 22195402.7
(22) Date of filing: 13.09.2022
(51) Int. Cl.: D21H 11/18, B65D 85/00, D21H 19/12, D21H 19/58, D21H 19/82, D21H 19/84, D21H 27/10, B32B 23/06

(54) **WRAP MATERIAL SUITABLE FOR FAT PACKAGING AND METHOD FOR ITS PRODUCTION**

(71) Applicant: Wihuri Packaging OY, 00570 Helsinki (FI)
(72) Inventor: Gater, Keith Laurence, Welshpool (GB); Parry, Christopher Richard, Welshpool (GB)
(74) Representative: Kröncke, Rolf

(57) **Abstract**

The present invention relates in a first aspect to a paper based wrap material to pack products, preferably food products, containing fat, oil and/or grease, with a specific layer including acrylic polymer based coating and a layer composed of a paper. In a further aspect, a method for preparing the same is provided, including the steps of coating a water based coating layer first on both sides of the paper layer C, followed by drying and further coating of at least one layer of an acrylic polymer based coating. Finally, the use of the said paper based wrap material as wrap material for greasy and fatty material including food and non-food, in particular, for use as a wrap for butter, is provided.

## Description

The present invention relates in a first aspect to a paper based wrap material to pack products, preferably food products, containing fat, oil and/or grease, with a specific layer including acrylic polymer based coating and a layer composed of a paper. In a further aspect, a method for preparing the same is provided, including the steps of coating a water based coating layer first on both sides of the paper layer C, followed by drying and further coating of at least one layer of an acrylic polymer based coating. Finally, the use of the said paper based wrap material as wrap material for greasy and fatty material including food and non-food, in particular, for use as a wrap for butter, is provided.

### Prior art

Wrapping and packaging of fatty, oily or greasy food or non-food requires particular packaging material. For example, for food products like butter or other type of fat packaging are made of parchment paper or grease resistant paper. Grease resistance is typically improved by composite laminates with aluminium and/or polyethylene. That is, typical constructions are papers and foils including aluminium with paper typically in combination with wax, paraffin or polyethylene between the aluminium and paper material. Although aluminium foils are good wrapping material for butter and margarine, aluminium foil tends to be expensive and are not desired from environmental aspects. However, aluminium helps to prevent deterioration of flavour of the butter or margarine and the like. At present, most butter wraps e. g. in the UK market are made of parchment paper or a grease resistant paper which is commonly made into composite laminates with aluminium or polyethylene, thus, having a laminate of aluminium, polyethylene and paper. A disadvantage of this type of wrapping material is the problem of recyclability and circular economy although the materials are made from renewable resources.

Wrapping material, for example, for butter requires specific properties. For example, it is important that the material has a good oxygen barrier to prevent oxidation of the material, e. g. in case of fatty butter, margarine or soft cheese, it also prevents rancidity of the food accordingly. Moreover, a specific feature of e. g. butter wrap films is its dead-fold capacity. Namely, the dead-fold capacity ensures clean distinct lines on the finish butter pack. A good dead-fold is required to stay in shape during the forming and filling process and a paper with integrated barrier technology is preferred.

Actually, customer requirements include a neat appearance of the package, while the material itself has a good grease resistance and excellent wet strengths with good dead-fold and high oxygen barrier to prevent any deterioration of the packed material. Moreover, today sustainable and natural, in particular, recyclable material is requested by customers.

Today various guidelines and requirements for claiming recyclability and compliance with local requirements must be met. In particular, it is requested by the market that the wrapping material is aluminium free while maintaining excellent water vapour properties as well as good grease resistance.

### Present invention

The present invention relates in a first aspect to a paper based wrap material to pack product, preferably food products, containing fat, oil and/or grease with the layers A/B/C/D/E with the layer C composed of a paper, wherein
- the outer layer A is an acrylic polymer based coating;
- the inner layer B is a water based coating;
- the second inner layer D is a water based coating, which may be identical or different to the water based coating of layer B;
- the second outer layer E is an acrylic polymer based coating, which may be identical or different to the acrylic polymer based coating of layer A;
wherein the layer A can be present or may be at least partly absent when outer layer E is adapted to be in contact with the product, or vice versa.

Namely, the present inventors recognized that combining the central layer or inner layer C composed of the paper material with an acrylic polymer based coating, a high oxygen barrier is achieved combined with good dead-fold, whereby the material is basically recyclable and maintains a look and feel of traditional butter wraps. Moreover, the material can be fully printed with brand imagery and is usable on current butter wrap machineries. The paper based wrap material contains additionally an inner layer B and a second inner layer D which is a water based coating. The water based coating representing inner layer B and second inner layer D may be the same or may be different.

As used herein, layer C composed of a paper refers to a paper material having good dead-fold properties and, in some aspects, good oxygen barrier properties.

In an embodiment, the oxygen barrier of layer C is less than 10 cm³ O₂/m²/24 hours at 23 °C and 0 % humidity, like less than 5 cm³ O₂/m²/24 hours, e. g. like than 3 cm³ O₂/m²/24 hours according to ASTM 3985.

It is within the term of layer C composed of a paper that additional components are present in lower amounts. For example, additional additives are present in the paper material forming layer C, whereby these additional additives are present in an amount of at most 5 weight-% dry weight. Typical additives in the paper include wood pulp fibres, cellulose-based additives, humectants, such as propylene glycol, fillers and pigments, like calcium carbonate and/or titanium dioxide, formation aids and sizing materials, such as ketone dimers.

It is preferred that the paper material is a repulpable paper or a recyclable paper.

In an embodiment, the layer C is a paper of at least 40 g/m², like at least 60 g/m². For example, the paper has a basis weight in the range from 40 to 200 g/m², in particular, in a range from 40 to 140 g/m² and preferably in a range from 40 to 90 g/m². For example, the paper is a micro fibrillated cellulose (MFC) or the like. Suitable paper materials are described e. g. in EP 3 483 337 B1 and are obtainable e. g. as Corran^{®} from Cellucomp. MFC is obtainable through a fibrillation process of cellulose fibres. Using mechanical shearing, the cellulose fibres are separated to a three-dimensional network of micro fibrils with the largest surface area. The obtained fibrils are smaller in diameter than the original fibres and can work in a network or a weblike structure. MFC fibres are able to give a material that is stronger and stiffer than other papers. In addition, MFC is described having excellent oxygen and moisture barriers, e. g. oxygen transmission rate of 4 to 10 ml/m²/day at 23 °C, 0 % humidity, and a water vapour transfer rate as low as 0.4 g/m²/day. The paper used typically represents a bio based material having beside the oxygen barrier good mechanical strength, thus, allowing good dead-fold properties.

The layer C may be a layer with a paper of at least 40 g/m², like with 40 to 200 g/m², preferably 40 to 140 g/m², in particular, 40 to 90 g/m² and/or wherein the paper of layer C is selected from a paper based on short fibre micro fibrillated paper fibres or kraft grade paper laminated with the micro fibrillated paper. Namely, depending on the required oxygen barrier, the paper e. g. being a laminated kraft paper when the oxygen barrier is not essential.

As used herein, the "oxygen barrier" refers to the oxygen transmission rate of the material in question. It relates to the permeation of oxygen through packaging, e. g. the paper. Standard test methods include the ASTM test method D3985, identifying the amount of oxygen gas that passes through a substance over a given period. As mentioned, the reduction of the oxygen is desired to avoid any negative effect including oxidation or malodour of any packed material.

Moreover, in an embodiment the paper layer C is a translucent or transparent paper. That is, the paper has opacity or transparency allowing to an extent that the object is seen through as long as the light is not allowed through the object. Transparency or translucence allows to show the packed material to some extend to the customer.

Depending on the packed product, an oxygen barrier or a moisture barrier is desired and required or not.

In an embodiment, layer C may also include additives like UV-blocking components etc.

Further, outer layer A and/or second outer layer E is an acrylic polymer based coating wherein the acrylic polymer e. g. a mixture of different acrylates is the main component. Of course, other components may be present including stabilizers, compatibilizers, etc. Other functional additives which may be present in the acrylic polymer layer A and or E include common surface treatment additives, including latex, SUA (styrene maleic anhydride), SAE (styrene acrylate emulsion), and AKD (alkyl ketene dimer), surface sizing agents, optical brighteners, non-ionic starches, carboxymethylcellulose (CMC), sodium alginate, (PVOH), polyvinyl alcohol, and AZC (Ammonium Zirconium) or KZC (Potassium Zirconium Carbonate), as zirconium based crosslinking additives.

The acrylic polymer according to the present invention is in an embodiment a water based acrylic polymer coating. Namely, the acrylic polymer is provided in form of emulsions or suspensions for coating avoiding any organic solvent material. The acrylic polymer may be provided as a water based acrylic polymer. In another embodiment, the acrylic polymer coating may be a solvent based acrylic polymer coating.

In this connection, the term "water based" refers to the embodiment wherein water is the main liquid for dissolving or emulsifying the other materials resulting in the dispersion or emulsion of the respective components in water. This allows to keep the functional polymers or substances in a usable form. In some aspects, the water based material contains water as the main component while containing other liquids including alcohol or polar solvents to improve usability.

As used herein, the term "solvent based" refers to solvents with low boiling point, polar, and, in particular, non-polar solvents, typically organic solvents including ethanol, isopropanol, Ethyl acetate or other material but with only minor or no water percentages.

With respect to the inner layer B and/or the second inner layer D, solvent based coatings may be possible but water based coatings are desired to avoid any negative influence on the paper layer C, including maintaining any organic solvents in the layer C after drying, resulting in the development or the presence of unwanted odour but also negative influence on mechanical properties of the paper material.

In an aspect of the present invention, inner layer B and/or the second inner layer D is a water based vanish or ink. That is, in an embodiment, a white printing is present as inner layer B and/or second inner layer D. A skilled person is well aware of suitable inks or vanishes useful in this connection. The coating, e. g. in form of inks or vanishes, are water based coatings. Typically, the matter includes resin, pigments and anti-foam agents. In an embodiment, the printing may be transparent or is white. It has been recognized that the presence of inner layer B and second inner layer D is beneficial with respect to the desired properties of the paper based wrap material according to the present invention. Namely, this coating reduces any penetration or infusion of the layers A and/or E into the layer C composed of a paper. Thus, negative influence of the components of the layer A and/or E on paper layer C is avoided. This includes a problem of the development of unwanted odour or any curling of the material as well as enclosing remaining traces of ammonia present in layer C. That is, it is desired that layers B and D cover the inner layer C fully, before applying layers A and/or E accordingly. The present inventors recognized that applying the layers B and D provides improved packaging material with improved material properties also with respect to storage of the packed products, in particular, the food.

In an embodiment, the ink present in the water based coating of forming layer B and/or second inner layer D is at least in an amount of 0.5 g/m² dry weight, like at least 1 g/m², e. g. 1.2 g/m², preferably, at least 1.5 g/m² ink dry weight.

The resin present in the water based coating of inner layer B and/or inner layer D may be based on polyurethane, acryl or heterocellulose.

Further, the paper based wrap material according to the present invention comprises at least one outer layer A and/or E. Namely, at least one outer layer A or E is present which is designed to be in contact with the packed product, like the food, e. g. the butter or the like.

That is, the second outer layer of A and E can be present or may be at least partly absent according to an embodiment of the present invention. That is, at least the outer layer contacting the wrapped product is present. In an embodiment, both layers, layer A and layer E are present which includes fully recovering. Further, one of said layers may be present only partly, namely, where the layer comes into contact with the fatty, oily or greasy product. In an embodiment, layer A and/or E are water based acrylic polymer coatings. The outer layers A and E provide a water resistance property to the paper based wrap material according to the present invention. For example, layer A and/or layer E have a water resistance of less than 30 g/m², preferably less than 25 g/m², determined by the COBB method, e. g. the TAPPI T441 test method. When applying the KIT test method according to TAPPI T559, the score obtained is at least 8, like a score of at least 10, e. g. 11 or 12.

Moreover, a moisture vapour transmission test (MVTR) may be applied at tropical conditions of 38 °C and 90 % RH, whereby the layers should have a value of less than 20 g/m²/day according to ASTM F1249, which results from layers A and/or E.

The outer layer provides the required grease resistance to the paper based wrap material according to the present invention. Thus, at least one of the outer layers A and/or E is designed to be in direct contact with the product. Typical products include butter, margarine or cheese, namely, food, but also non-food, like soap, etc.

In an embodiment of the present invention, customers' specific images and printing may be present. This printing may be present between outer layer A and inner layer B, when layer A is the outer layer of the final packaging.

In an aspect, decorative printing as customer specific printing, may be present. Also the inner layer B may be present in form of an individual printing. In another embodiment, the decorative printing or the customer's specific printing may be present as a surface printing on layer A.

Moreover, UV-blocking compounds may be present in the paper based wrap material according to the present invention. Typical UV-blocking compounds include hydroxyvinylbenzotriazole, hydroxyvinyltriercine, benzotriazole, cyano acrylate, HALS. The UV-blocking compounds may be present in at least one of layers A, B and D, but may also be provided in a separate layer located between layers A and B, layers B and C, layers C and D, and layers D and E, respectively.

In an embodiment of the present invention, the paper based wrap material according to the present invention consists of layers A, B, C, D and E, wherein layer C is composed of a paper, layer A and layer E are both present being an acrylic polymer based coating with a coating weight of at least 2.0 g/m², like at least 2.5 g/m², preferably 4.0 g/m² acrylic polymer dry weight, layers B and D are white printed coatings with ink of at least 1.2 g/m² dry weight. This material comprising at least layers A, B, C, D and E has good oxygen barrier properties in combination with grease resistance and, in addition, good dead-fold. Further, the material is based on renewable components and allows good recyclability. In addition, the wrap material according to the present invention is e. g. food grade and reduces problems like chemical spoilage due to light, oxygen, heat and moisture.

In a further aspect, a method for producing a paper based wrap material to pack products is provided.

Namely, the method for producing the paper based wrap material for products, in particular, food products, containing fat, oil and/or grease, wherein said paper based wrap material is composed of the layers A/B/C/D/E comprising the steps of
- providing layer C and coating layer B and D simultaneously or sequentially on paper C;
- drying the layers;
- coating of outer layer A and E simultaneously or sequentially, and drying the obtained paper based wrap material.

Each of the steps are well known to the skilled person. For example, the application of coating layers B and D may be in one pass on both sides by known techniques. The application of the coating can be conducted by coating methods such a rotogravure, flexographic, offset, digital, semi-flexo, offset gravure, Meyer bar or dip coating.

Also the acrylic polymer coating of layers A and E may be applied by the above methods.

In addition, application of the layers may be gradually. However, it is preferred that coating is conducted on both sides at the same time.

After application of the layers B and D, the material is dried by conventional methods and, in the next step, layers A and E are applied on the material accordingly. The application of layers A and E is followed by a further drying step to obtain the paper based wrap material according to the present invention.

If applicable, further steps are conducted including decorative printing or UV-layer coating by conventional means.

The paper based wrap material may be processed further, e. g. comprising the step of slitting the paper based wrap material to predetermined size for further packaging.

Finally, the present invention relates to the use of the paper based wrap material according to the present invention or obtainable by a method according to the present invention as wrap material. The wrap material is particularly useful for wrapping greasy, oily and fatty material. This greasy, oily or fatty material includes food and non-food material. Typical examples of food material are butter, margarine or cheese, while non-food materials include soap. In an embodiment, the wrap material according to the present invention is a butter wrap.

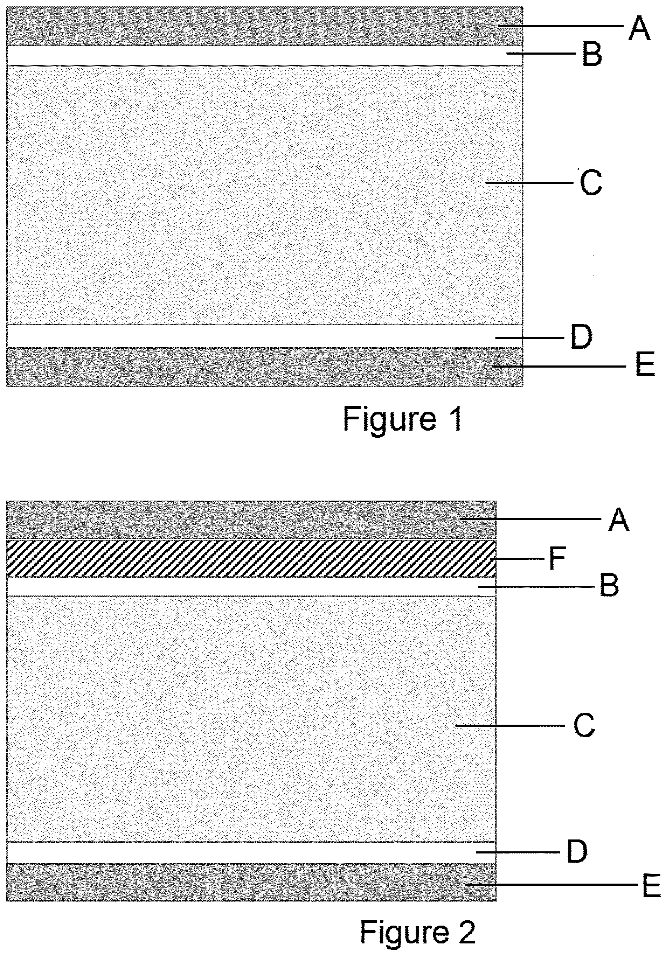

In the following, the paper based wrap material will be described by reference to the figures. In figure 1, the layers A to E forming the paper based wrap material according to the present invention is shown. Layer C is composed of a paper as described herein. By known techniques, layers B and D are coated on layer C, while layers A and E represent the outer layers of the paper based wrap material according to the present invention. At least one of layers A and E is present fully. Namely, the layer which is designed to be in contact with the product. The other outer layer (either A or E) may be absent or may be present partly only.

Layers A and E are applied to the material of layers B, C, D by common coating methods.

The presence of layers B and D reduces or prevents penetration or infusion of the material and components forming layers A and E, respectively. Since the acrylic polymer based coating of layers A and E are typically water based coatings, a likelihood of penetration into layer C is given in the absence of the layers B and D. However, penetration or infusion in layer E results in undesired curling and poor odour of the finished coated paper accordingly.

It is submitted that while the paper layer C provides good water and oxygen water properties as well as good dead-fold properties, the layers A and E allow to increase grease resistance. Layers B and D representing intermediate layers are beneficial with respect to the properties mentioned above as well as improving usability of the paper material by avoiding the undesired curling and poor odour.

Figure 2 represents a further example of the paper based wrap material according to the present invention. Therein, a further layer F is present between layers A and B. Layer F represents a decorative printing or customer specific printing located on the outer layers of the final package. For example, in case layer A is absent or only present partly, layer F may be the outer layer accordingly.

## Claims

1. Paper based wrap material to pack product, preferably food products, containing fat, oil and/or grease with the layers A/B/C/D/E with the layer C composed of a paper, wherein
- the outer layer A is an acrylic polymer based coating;
- the inner layer B is a water based coating;
- the second inner layer D is a water based coating, which may be identical or different to the water based coating of layer B;
- the second outer layer E is an acrylic polymer based coating, which may be identical or different to the acrylic polymer based coating of layer A;
wherein the layer A can be present or may be at least partly absent when outer layer E is adapted to be in contact with the product, or vice versa.

2. The paper based wrap material to pack products according to claim 1, wherein layer C is a high oxygen barrier layer, of less than 10, preferably less than 5, like less than 3 cm³ O₂/m²/24 hours, according to ASTM 3985.

3. The paper based wrap material to pack products according to claim 1 or 2, wherein layer A and/or E is a water based acrylic polymer coating.

4. The paper based wrap material to pack products according to any one of the preceding claims, wherein the inner layer B and/or the second inner layer D is a water based vanish or ink.

5. The paper based wrap material to pack products according to any one of the preceding claims, wherein UV-blocking compounds are present in at least one of layers A, B and D or is present as a separate layer located between layers A and B, layers B and C, layers C and D, or layers D and E.

6. The paper based wrap material to pack products according to any one of the preceding claims, wherein the products are food products and the outer layer E and/or outer layer A is adapted to be in contact with the food product.

7. The paper based wrap material to pack products according to any one of the preceding claims, wherein layer C is a paper of at least 40 g/m², like with 40 to 200 g/m², preferably 40 to 140 g/m², in particular, 40 to 90 g/m² and/or wherein the paper of layer C is selected from a paper based on short fibre micro fibrillated paper fibres or kraft grade paper laminated with the micro fibrillated paper.

8. The paper based wrap material to pack products according to any one of the preceding claims, wherein layers A and/or E have a water resistance of less than 30 g/m², preferably less than 25 g/m² determined by COBB method or a score of at least 8, like a score of at least 10 determined by the KIT test method.

9. The paper based wrap material to pack products according to any one of the preceding claims, wherein the coating, like the ink, present in the inner layer B and/or second inner layer D is at least 0,5 g/m² dry weight, like at least 1 g/m², e. g. at least 1.2 g/m², preferably 1.5 g/m² ink dry weight.

10. The paper based wrap material to pack products according to any one of the preceding claims, wherein the coating weight of layer A and/or E is at least 2 g/m², like 2.5 g/m², preferably 3.0 g/m², like 4.0 g/m² dry weight.

11. A method for producing a paper based wrap material to pack products, preferably food products, containing fat, oil and/or grease, wherein said paper based wrap material is composed at least of the layers A/B/C/D/E, comprising the steps of
- providing layer C and coating layer B and D simultaneously or sequentially on paper C;
- drying the layers;
- coating of outer layer A and E simultaneously or sequentially, and drying the obtained paper based wrap material.

12. The method for producing a paper based wrap material to pack products according to claim 11, wherein application of the coating layers B and D is by rotogravure, flexographic, offset, digital, semi-flexo, offset gravure, Meyer bar or dip coating.

13. The method for producing a paper based wrap material to pack products according to claim 11 or 12, wherein coating of layers B and D on both sides is one pass and/or applying the acrylic polymer coating of outer layer A and E in one pass on layers B and D respectively.

14. The method for producing a paper based wrap material to pack products according to any one of claims 11 to 13, further comprising the step of slitting the paper based wrap material to predetermined size.

15. A use of a paper based wrap material according to any one of the claims 1 to 11 or obtainable by a method according to any one of claims 11 to 14 as wrap material for greasy and fatty material, including food, like butter, cheese and non-food, like soap, in particular, for use as a wrap for butter.
